# FASCICULE DE BREVET EUROPEEN

(11) **EP 1 794 828 B1**
(45) Date de publication et mention de la délivrance du brevet: **22.06.2016**
(21) Numéro de dépôt: 05794993.5
(22) Date de dépôt: 28.07.2005
(51) Int. Cl.: H01M 4/36, H01M 4/38, H01M 4/134, H01M 4/62, H01M 10/0525

(54) **MATERIAU COMPOSITE D'ELECTRODE NEGATIVE, PROCEDE DE FABRICATION, ELECTRODE NEGATIVE ET ACCUMULATEUR LITHIUM-ION**
ZUSAMMENGESETZTES NEGATIV-ELEKTRODENMATERIAL, HERSTELLUNGSVERFAHREN DAFÜR, NEGATIV-ELEKTRODE UND LITHIUMIONENBATTERIE
COMPOSITE NEGATIVE ELECTRODE MATERIAL, PRODUCTION METHOD THEREOF, NEGATIVE ELECTRODE AND LITHIUM-ION BATTERY

(30) Priorité: 30.07.2004 FR 0451742
(43) Date de publication de la demande: 13.06.2007
(73) Titulaire: CENTRE NATIONAL D'ETUDES SPATIALES, 75001 Paris (FR); Centre National de la Recherche Scientifique, 75016 Paris (FR); Universite de Montpellier II, 34095 Montpellier Cedex 5 (FR)
(72) Inventeur: JUMAS, Jean-Claude, F-34830 JACOU (FR); LIPPENS, Pierre-Emmanuel, F-34130 SAINT-AUNES (FR); OLIVIER-FOURCADE, Josette, F-34830 JACOU (FR); ROBERT, Florent, F-34360 PARDAILHAN (FR); WILLMANN, Patrick, F-31450 MONTGISCARD (FR)
(74) Mandataire: Ahner, Philippe
(86) Numéro de dépôt international: PCT/FR2005/050627
(87) Numéro de publication internationale: WO 2006/021714

(56) Documents cités:
- EP-A- 0 823 741
- EP-A- 1 317 013
- US-A1- 2003 180 619

## Description

### Domaine technique

La présente invention se rapporte à un matériau composite d'électrode négative, à un procédé de fabrication de ce matériau, ainsi qu'à une électrode négative et à un accumulateur lithium-ion comprenant ce matériau.

En particulier, la présente invention se rapporte à un matériau d'électrode négative utilisable dans des accumulateurs lithium-ion rechargeables.

Dans la description ci-dessous, les références entre crochets ([.]) renvoient à la liste des références après les exemples.

### Art antérieur

Les matériaux d'électrodes négatives pour accumulateurs lithium-ion sont généralement des matériaux à base de carbone.

Du fait des limites de capacité volumique et gravimétrique et de manière à limiter les risques liés à la formation de dendrites, un intérêt récent s'est porté vers d'autres matériaux.

Une attention particulière s'est par exemple portée sur les matériaux à base d'étain. Le mécanisme de base est la formation réversible de phases intermétalliques Li-Sn à bas potentiel, c'est-à-dire, généralement de 0,2 à 0,6 V par rapport au potentiel du lithium métallique, qui permet en principe l'intercalation et la désintercalation de lithium jusqu'à un maximum de 4,4 Li/Sn (molaire).

Malheureusement, les variations importantes de volume supérieures à 100 % du fait des réactions liées à l'intercalation et la déintercalation limitent fortement les performances de l'électrode, ce qui empêche, par exemple l'utilisation d'électrodes constituées d'étain pur.

De manière à améliorer la stabilité mécanique des électrodes en limitant les variations de volume, l'utilisation de petites particules d'étain obtenues par exemple par électrodéposition sur des substrats de cuivre a été proposée par J.O. Besenhard et al dans le document **[1].** Cependant, l'épaisseur de la couche de particules d'étain était trop mince pour être utilisable dans la pratique.

La plupart des matériaux à base d'étain sont formés à partir d'un composé électrochimiquement actif à base d'étain, dispersé dans une matrice inactive limitant l'expansion du matériau actif. L'exemple le plus courant est l'oxyde composite amorphe à base d'étain (TCO) qui a été proposé par Fuji Photo Film CO., LTD décrit dans les documents **[2]** et **[3].** La formule basique du TCO peut s'écrire SnMₓO_{y} dans laquelle M est un élément métallique tel que B(III), Al(III) et P(V). Les centres électrochimiquement actifs sont les atomes de Sn(II) liés aux atomes d'oxygène et dispersés dans la matrice. L'insertion de lithium conduit d'abord à la transformation irréversible de Sn(II) en Sn(O) suivie par la formation électrochimique réversible des alliages Li-Sn avec une stoechiométrie maximale correspondant à Li_{4,4}Sn.

Ce mécanisme a été étudié par différentes techniques telle que la diffraction par rayons X décrite par exemple par I.A. Courney et al. dans le document **[4] ;** par résonance magnétique nucléaire (RMN) décrite par exemple par G.R. Goward et al. dans le document **[5] ;** et par spectroscopie Mössbauer décrite par exemple par J. Chouvin et al. dans le document **[6].** Les capacités gravimétrique et volumique dépendent principalement de la composition de la matrice de verre, de la taille des particules et de la préparation du matériau d'électrode. Elles sont généralement plus importantes que celles des matériaux à base de carbone. Les performances les meilleures semblent être 600 mAh/g et 2200 mAh/cm³ respectivement pour les capacités gravimétrique et volumique, comme indiqué dans Y. Idota et al. **[3].**

Cependant, ces matériaux ont une capacité irréversible d'environ 400 mAh/g à la première décharge, ce qui limite les performances des accumulateurs qui peuvent être fabriquées à partir de ces matériaux.

Il y a en fait deux problèmes principaux avec le TCO qui sont l'importante perte irréversible de capacité due à la réaction de Li avec Sn(II) donnant Sn(0) au cours du premier cycle de charge et la faible cyclabilité (nombre de cycles charge/décharge) en comparaison des anodes à base de carbone due à l'agrégation de l'étain comme décrit par I.A. Courney et al. **[4].**

D'autres essais sur des matériaux cristallins à base d'oxyde d'étain tels que SnO et SnO₂ ont été réalisés. Ils montrent les mêmes inconvénients avec une cyclabilité plus faible encore, comme cela est rapporté par M. Winter et J.O. Besenhard dans le document **[7].**

La demande de brevet EP 1 317 013 décrit un électrolyte non aqueux obtenu en dissolvant un sel de lithium dans un solvant non aqueux à base de lactone. Cet électrolyte non aqueux est utilisable dans une pilé secondaire où l'électrode négative comprend du lithium métallique, un alliage de lithium ou un matériel absorbant et libérant du lithium. Le document [8] décrit un matériau d'électrode avec une phase active de SnSb recouvert de Li₃PO₄.

Il existe donc un réel besoin de trouver de nouveaux matériaux d'électrode négative, utilisables notamment pur la fabrication d'accumulateurs lithium-ion rechargeables, qui ne présentent pas les inconvénients précités des matériaux de l'art antérieur.

### Exposé de l'invention

La présente invention se rapporte précisément à un matériau d'électrode négative qui répond au besoin précité. En effet, le matériau de la présente invention présente notamment une bonne réversibilité, une perte en capacité au premier cycle faible et une excellente cyclabilité (nombre de cycles charge/décharge).

Le matériau de la présente invention tel que défini dans le jeu de revendications annexé comprend une phase active constituée d'un matériau M à base de Al, Si, Sn, Sb ou d'un mélange de ceux-ci, et une phase support constituée d'un matériau XₐY_{b}O_{c}, dans lequel :
O est un oxygène ;
Y est un cation de degré d'oxydation m = 3, 4, 5 ou 6 ;
X est un cation de degré d'oxydation d = 1, 2, 3, 4 ou 5, X assurant
l'électroneutralité de XₐY_{b}O_{c} ; et dans laquelle :
   c est tel que 2 ≤ c ≤ 10 ;
   b est tel que 1 ≤ b ≤ 4 ; et
   a = (2c-bm)/d ;
   une interface de composition mixte existant entre la phase active et la phase support, ladite interface étant constituée des éléments M, X, Y et O.

L'originalité de la présente invention réside dans la nature du matériau d'électrode négative qui est constitué d'un matériau de formule XₐY_{b}O_{c} constituant la phase support, électrochimiquement inactive, en interaction avec une phase active à base d'étain, et/ou de silicium et/ou d'aluminium et/ou d'antimoine grâce à une interface de composition mixte issue des composants M et XₐY_{b}O_{c}. Cette interface de composition mixte génère une adhésion, c'est-à-dire qu'elle maintient une cohésion, entre la phase active M et la phase support XₐY_{b}O_{c} et permet notamment d'absorber les variations volumiques de la phase active. Elle confère en outre au matériau de l'invention ses propriétés particulières décrites dans la présente.

Dans la présente, on appelle « tenue en cyclage » ou « cyclabilité » la propriété de conservation des capacités gravimétrique et volumique au cours de plusieurs cycles électrochimiques.

On appelle « Cycle électrochimique » un cycle qui comprend :
- une étape de décharge ; mouvement de l'électrode négative vers l'électrode positive d'ions Li⁺ à l'intérieur de l'accumulateur dans l'électrolyte et d'électrons à l'extérieur de l'accumulateur; et
- une étape de charge ; mouvement de l'électrode positive vers l'électrode négative d'ions Li⁺ à l'intérieur de l'accumulateur dans l'électrolyte et d'électrons à l'extérieur de l'accumulateur.

On appelle « phase active » une phase cristalline ou amorphe dont un ou plusieurs éléments sont impliqués réversiblement dans la conversion d'énergie chimique en énergie électrique (réaction électrochimique).

On appelle « interface » une phase cristalline ou amorphe située entre la phase active M et la phase inactive qui forme le matériau support XₐY_{b}O_{c}.

On appelle « composition mixte » la composition impliquant les éléments de la phase active M et de la phase inactive XₐY_{b}O_{c}.

On appelle « support » un réseau d'atomes qui n'est pas impliqué directement dans la conversion électrochimique et qui supporte l'espèce active par l'intermédiaire de l'interface de composition mixte. Il s'agit d'une phase cristallisée ou amorphe.

On appelle « formateur de réseau anionique » un élément assurant l'ossature du réseau support par formation de liaisons à caractère plutôt covalent avec l'oxygène.

On appelle « modificateur de réseau ou contre-ion» un élément modifiant la dimensionnalité du réseau support par formation de liaisons à caractère plutôt ionique. Le modificateur assure la compensation de charge.

Dans la présente invention, X est de préférence un modificateur de réseau qui permet de modifier la dimensionnalité créant des liaisons ioniques non pontées avec l'oxygène et agissant sur la conductivité ionique. X est un cation choisi par exemple parmi les éléments alcalins (par exemple Li^{I}, Na^{I}), les alcalino-terreux (par exemple Mg^{II}, Ca^{II}), les éléments de transition de degré d'oxydation compris entre 1 et 5 (tels que Ti, V, Mn, Fe, Co, Ni, Cu, Ag), les éléments p de degré d'oxydation 3 ou 5 (tels que B^{III}, Al^{III}, P^{V}, In^{III}) ou une combinaison de ces éléments.

Dans la présente invention, Y est de préférence un formateur de réseau agissant sur la conductivité électronique et qui assure la formation dans le matériau de l'invention :
(i) de complexes anioniques de formule (Y_{b}O_{c})ₙ à base d'unités tétraédriques YO₄, où n = bm-2c ≤ 0 avec 1 ≤ b ≤ 4, avec m, le degré d'oxydation de Y, égal à 3, 4, 5 ou 6, et avec 2 ≤ c ≤ 10; et/ou
(ii) de réseaux continus mono- bi- ou tridimensionnels formés d'enchaînements infinis d'entités anioniques (Y_{b}O_{c})ⁿ, avec Y, b, c et n tels que définis précédemment.

Ces complexes et/ou réseaux peuvent donc être présents dans le matériau d'électrode négative de l'invention.

Selon l'invention, les complexes tétraédriques peuvent être condensés selon la formule Y_{b}O_{c} avec 1 ≤ b ≤ 4, et 2 ≤ c ≤ 10. Il peut s'agir à titre d'exemple de YO₄, Y₂O₇, Y₃O₉, Y₄O₁₀ ou d'un mélange de ceux-ci.

Selon l'invention, Y est choisi par exemple parmi B^{III}, Al^{III}, Si^{IV}, Ge^{IV}, P^{V}, Sb^{V}, S^{VI} ou une combinaison de ces éléments.

Selon l'invention, M est tel que défini ci-dessus. Dans la présente, « M » est bien entendu compris comme M^{o}, c'est-à-dire comme la forme métallique du métal. Par « métal à base de », on entend « constitué de » (métal seul) ou « comprenant » (par exemple un alliage comprenant ce métal). A titre d'exemple non limitatif, lorsque M est Sn, alors X, Y, a, b et c peuvent être tels que : X = B, Y = P, a = 1, b = 1, c = 4.

Selon l'invention, la proportion molaire [M]/[XaY_{b}O_{c}] dans le matériau d'électrode négative est de préférence comprise entre 0,1 et 100, généralement entre 0,1 et 10. Cette proportion molaire peut être par exemple comprise entre 1 et 5 pour les matériaux de l'invention présentés à titre d'exemple.

Le matériau d'électrode négative de l'invention peut être par exemple un matériau comprenant une phase active M à base de Sn, Si ou Al ou d'un mélange de ceux-ci en interaction avec une phase support BPO₄, une interface de composition mixte existant entre ces deux phases, ladite interface étant constituée des éléments M, B, P et 0. Dans cet exemple, à titre illustratif uniquement, lorsque M est Sn, la proportion molaire [M]/[BPO₄] est par exemple comprise entre 1 et 5, par exemple de 2,5.

Selon l'invention, dans la phase active M, les éléments Al, Si, Sn et Sb peuvent être associés à du carbone dans une proportion molaire pouvant aller jusqu'à 1:1 (correspondant à [C]/[M] ≤ 1). En effet les inventeurs ont noté que la présence de carbone dans la phase active peut permettre d'améliorer les performances du matériau d'électrode négative de l'invention, notamment lorsque M est Si. Cet effet peut certainement être observé pour d'autres éléments que Si.

La présente invention se rapporte également à un procédé de fabrication du matériau de l'invention tel que défini dans le jeu de revendications annexé et comprenant les étapes suivantes :
- mélange de précurseurs d'oxydes de X et de Y ;
- premier traitement thermique du mélange de précurseurs d'oxydes de X et de Y afin d'obtenir le matériau XₐY_{b}O_{c} ;
- refroidissement puis broyage du matériau XₐY_{b}O_{c} obtenu ;
- mélange du matériau XₐY_{b}O_{c} broyé obtenu avec la phase active M ;
- deuxième traitement thermique réalisé sous atmosphère non oxydante pour le matériau M et à une température inférieure à la température de fusion du matériau XₐY_{b}O_{c} et suffisamment élevée pour que le matériau M réagisse chimiquement avec XₐY_{b}O_{c} pour former ladite interface entre ladite phase active et ladite phase support et obtenir ainsi ledit matériau d'électrode négative ; et
- refroidissement dudit matériau d'électrode négative obtenu.

Dans ce procédé, X, Y, a, b, c et M sont tels que définis ci-dessus.

Selon l'invention, le mélange de précurseurs d'oxydes de X et de Y peut être réalisé par simple mélange des poudres de ces précurseurs. Ces précurseurs peuvent être définis comme étant des composés organiques et/ou minéraux susceptibles de former des liaisons ME-O-ME, où ME est un métal, par condensation ou hydrolyse/condensation (méthode sol-gel). On peut citer à titre d'exemple les carbonates (par exemple Li₂CO₃), les acétates ME-(CH₃CO₂)ₙ, les hydroxydes (ME-OH), les chlorures (par exemple AlCl₃), les nitrates Ca(NO₃)₂, les silicates Li₂Si₂O₅, les ME-oxoalcoxydes (par exemple tel que ME(OR)ₙ avec ME choisi par exemple parmi Al, Ti, Zn, et R = OH), le tétraéthoxysilane (TEOS), etc. Cette liste n'est assurément pas exhaustive, mais l'homme du métier saura la compléter de manière évidente à partir des éléments fournis dans la présente description

Selon l'invention, le précurseur d'oxyde de X peut être par exemple B₂O₃ et et/ou H₃BO₃, et le précurseur d'oxyde de Y peut être par exemple P₂O₅ et/ou NH₄H₂PO₄. Dans ce cas, la phase support XₐY_{b}O_{c} fabriquée est BP0₄ et, dans le matériau de l'invention obtenu, l'interface de composition mixte est constituée des éléments M, B, P et O.

La proportion de chacun des oxydes dans le mélange de précurseurs est bien entendu la proportion stoechiométrique permettant d'obtenir le matériau XₐY_{b}O_{c} défini ci-dessus. Ces oxydes de X et de Y sont disponibles dans le commerce. Il peut s'agir par exemple dans le cas d'une phase support BPO₄, de toutes les combinaisons entre d'une part B₂O₃ et H₃BO₃ et d'autre part P₂O₅ et NH₄H₂PO₄ sont utilisables.

Selon l'invention, le mélange de précurseurs des oxydes de X et Y peut être broyé, par exemple dans un mortier, afin d'homogénéiser le mélange.

Selon l'invention, le premier traitement thermique permet d'obtenir le matériau XₐY_{b}O_{c}. Pour la mise en oeuvre de ce traitement, le mélange est chauffé à une température de 100 à 1200°C. Par exemple, des essais sur BPO₄ ont montré pour ce matériau que la température du premier traitement thermique est de préférence comprise entre 300°C et 1000°C, avec une préférence entre 500°C et 800°C, pour obtenir une bonne cristallinité.

Le chauffage du mélange des précurseurs à la température choisie est de préférence réalisé après une montée en température comprise entre 1°C/minute à 20°C/minute, de préférence entre 1°C/minute et 5°C/minute. La montée en température est de préférence pas trop rapide afin d'éviter un dégagement brusque de NH₃, par exemple pour un précurseur tel que NH₄H₂PO₄, et favoriser la réaction entre les précurseurs des oxydes de X et de Y.

Le mélange de précurseurs est maintenu à la température de traitement pendant une durée de 2 à 12 heures. Par exemple dans le cas d'un précurseur tel que NH₄H₂PO₄, il est maintenu à cette température de préférence pendant une durée minimale de 3 heures afin d'effectuer un possible dégagement de NH₃ et permettre une réaction complète entre les précurseurs des oxydes de X et de Y. Une durée de 6 heures est par exemple suffisante pour une bonne homogénéisation du composé mais une durée supérieure peut être utilisée. Ainsi, par exemple, une durée de 3 à 6 heures apparaît avantageuse pour fabriquer un matériau BPO₄.

Le matériau XₐY_{b}O_{c} obtenu est ensuite refroidi, par exemple en le laissant à température ambiante.

Selon l'invention, l'étape suivante de broyage matériau XₐY_{b}O_{c} est de préférence réalisée de manière à obtenir une granulométrie de taille micrométrique (microparticules) et/ou nanométrique (nanoparticules). Le broyage peut être un broyage mécanique (par exemple broyeur à boulets) ou manuel (par exemple dans un mortier). Sont appelées microparticules des particules dont la taille est généralement comprise entre 0,1 et 100 µm. La taille des nanoparticules est généralement inférieure à 100 nanomètres.

Le matériau XₐY_{b}O_{c} est alors mélangé au matériau actif M. Le matériau M est de préférence sous forme de poudre, de préférence ayant une granulométrie équivalente à celle du matériau XₐY_{b}O_{c}.

Le deuxième traitement thermique, conforme au procédé de l'invention, permet de créer l'interface de composition mixte entre le matériau XₐY_{b}O_{c} et la phase active M. Cette interface est définie ci-dessus. Elle se présente sous la forme d'un composé ou d'un mélange constitué des éléments M, X, Y et O dont les caractéristiques physicochimiques n'ont pas encore pu être déterminées. Les inventeurs pensent à un matériau amorphe. La condition essentielle d'obtention de cette interface est la température utilisée pour ce deuxième traitement thermique.

Dans ce deuxième traitement thermique, le mélange est donc porté à une température suffisamment élevée pour former ladite interface entre le matériau XₐY_{b}O_{c} et la phase active M et suffisamment basse pour éviter la fusion de XₐY_{b}O_{c}. En outre, la durée de chauffage de ce deuxième traitement thermique est de préférence suffisante pour une bonne homogénéisation et une réaction complète, mais pas trop longue pour éviter la formation de M métallique.

Selon l'invention, le deuxième traitement thermique est réalisé à une température comprise entre 100 et 1200°C, pendant une durée de 2 à 12 heures.

Par exemple, des essais ont montré que la fourchette optimale s'établit entre 300°C et 600°C lorsque XₐY_{b}O_{c} est BPO₄ et M est Sn. Par exemple, des essais ont montré que la durée du chauffage est avantageusement comprise entre 4 heures et 8 heures lorsque XₐY_{b}O_{c} est BPO₄ et M est Sn.

Selon l'invention, de manière générale, le deuxième traitement thermique est réalisé sous atmosphère non oxydante pour M. Il s'agit d'une atmosphère inerte, par exemple d'argon et/ou d'azote, de préférence sec(s) afin d'éviter l'oxydation de M. L'atmosphère peut avantageusement être légèrement réducteur avec une faible teneur en hydrogène, de préférence 5%. L'atmosphère est donc de préférence contrôlée.

Selon l'invention, le matériau d'électrode négative obtenu peut être refroidi par exemple par trempe, par exemple à la température ambiante, de préférence sous atmosphère contrôlée pour éviter l'oxydation,par exemple comme décrit ci-dessus.

La présente invention se rapporte donc à une nouvelle classe de matériaux d'électrode négative utilisables pour fabriquer des accumulateurs lithium-ion ayant notamment pour caractéristiques ;
- une capacité gravimétrique supérieure à celle du graphite (372 mAh/g) ; et
- une capacité volumique supérieure à celle du graphite (837 mAh/cm³).

Le procédé de fabrication de l'invention et le matériau obtenu permettent, dans l'application accumulateur lithium-ion rechargeable :
- d'améliorer les performances et les capacités gravimétrique et volumique par rapport aux électrodes négatives à base de carbone, d'étain, de silicium, d'aluminium, et d'antimoine de l'art antérieur;
- un bas voltage de travail, une bonne réversibilité, une perte en capacité au premier cycle faible et une excellente cyclabilité. (intercalation et déintercalation de Li). Ce matériau garde une haute capacité de rétention après plusieurs cycles.

Le procédé de fabrication du matériau est rapide et présente un coût de mise en oeuvre réduit.

En outre, la présente invention permet une plus grande sécurité et un plus grand respect de l'environnement.

La présente invention se rapporte donc également à une électrode négative d'accumulateur lithium-ion rechargeable comprenant le matériau d'électrode négative de l'invention. Une telle électrode trouve une application dans les accumulateurs lithium-ion.

La présente invention se rapporte donc également à un accumulateur lithium-ion rechargeable comprenant au moins une électrode positive, au moins une électrode négative, et un électrolyte, ledit accumulateur étant caractérisé en ce que ladite, au moins une, électrode négative comprend un matériau d'électrode négative conforme à la présente invention.

Pour fabriquer un accumulateurs lithium-ion selon l'invention, on peut utiliser l'un quelconque des procédés connus de l'homme du métier, en remplaçant simplement le matériau d'électrode négative de l'art antérieur par un matériau conforme à la présente invention.

Le document **[3]** décrit des exemples de protocoles de fabrication d'accumulateurs lithium-ion et les matériaux utilisables pour fabriquer un accumulateur lithium-ion selon la présente invention. Il suffit de remplacer les matériaux d'électrode négative décrits dans ce document par un matériau conforme à la présente invention.

Par rapport au document **[3],** d'autres matériaux d'électrode positive sont également utilisables dans la présente invention pour fabriquer un accumulateur lithium-ion. On peut citer à titre d'exemple LiFePO₄, LiCoO₂, LiCoO₂ substitués (obtenus par substitution partielle de Co telle que Li(CoNiMn)O₂, LiMn₂O₄

L'électrolyte assure le transport des ions Li⁺ entre les électrodes de l'accumulateur. Les électrolytes utilisables dans les accumulateurs lithium-ion de la présente invention sont ceux connus de l'homme du métier. On peut citer à titre d'exemple :
- les liquides tels que LiPF₆ + solvant - exemples de solvants : carbonate d'éthylène/carbonate de propylène (EC/PC en proportions 1:1) ; carbonate d'éthylène/carbonate de diéthyle (EC/DEC en proportions 1:1) ; carbonate de propylène/carbonate d'éthylène/carbonate de diméthyle (PC /EC/DMC en proportions 1:1:3) ;
- les polymères tels que LiXF₆ (avec X = P, As, Sb) + P(EO)₆ (poly(oxyde d'éthylène));
- les solides tels que LiBOB.

D'autres avantages apparaîtrons encore à l'homme du métier à la lecture des exemples qui suivent donnés à titre illustratif et non limitatif, en référence aux figures annexées.

### Brève description des figures

- Figure 1 _{:} diffractogramme (Cu Kα) effectué sur un matériau conforme à la présente invention à base de Sn et de BPO₄. Les pics associés aux phases cristallisées BPO₄ et βSn sont respectivement repérés par des astérisques et des carrés.
- Figure 2 (a et b) : spectres Mössbauer ¹¹⁹Sn sur un matériau conforme à la présente invention non lithié (a) de l'invention, et à la fin de la première décharge (b). Le spectre du même matériau non lithié (a) montre l'existence de Sn(0) (courbe 1) et de Sn(II) dans 2 environnements différents (courbes 2 et 3). Les composantes (courbes 1 et 2) du spectre du composé lithié (b) peuvent être attribuées à des alliages Li-Sn.
- Figure 3 : photographie obtenue par microscopie électronique à balayage en mode rétro-diffusion d'un matériau de la présente invention non lithié.
- Figure 4 : variations du potentiel de charge/décharge d'un matériau M_{2.5}BPO₄ de l'invention dans la fourchette 0,1 à 1,2 V avec M = Sn. Sur cette figure, « N Li » indique le nombre de Li intercalés, « P » le potentiel en V par rapport au potentiel du lithium métallique, « Cs » est la capacité gravimétrique en mAh/g.
- Figure 5 : schéma d'un exemple d'accumulateur lithium-ion utilisant un matériau selon l'invention comme matériau d'électrode négative
- Figure 6 : Variations de la capacité massique en fonction du nombre de cycles de charge/décharge pour un accumulateur lithium-ion utilisant un matériau de l'invention comme matériau d'électrode négative. Sur cette figure « C » représente la capacité gravimétrique en mAh/g et « Cy » le nombre de cycles.
- Figure 7 : Diffractogramme (Cu Kα) effectué sur un matériau conforme à la présente invention à base de Sn, de Si et de BPO₄. Les pics associés aux phases cristallisées BPO₄, Sn et Si sont respectivement repérés par des astérisques, des croix et des ronds.
- Figure 8 : Spectre Mössbauer de ¹¹⁹Sn d'un matériau conforme à la présente invention à base de Sn, de Si et de BPO₄. Le spectre montre l'existence de Sn⁰ (sous spectre 1) et de Sn^{II} (sous spectre 2).
- Figure 9 : Variations du potentiel de charge/décharge d'un matériau conforme à la présente invention à base de Sn, de Si et de BPO₄ dans la fourchette 0,1 à 1,2 V. Sur cette figure, « N Li » indique le nombre de Li intercalés, « P » le potentiel en V par rapport au potentiel du lithium métallique, « Cs » est la capacité gravimétrique en mAh/g.
- Figure 10 : Diffractogramme (Cu Kα) effectué sur un matériau conforme à la présente invention à base de Sn et de CaSiO₃. Les pics associés aux phases cristallisées CaSiO₃, SnO₂, CaSnSiO₅ et Sn sont respectivement repérés par des astérisques, des ronds, des dièses et des croix.
- Figure 11 : Spectre Mössbauer de ¹¹⁹Sn d'un matériau conforme à la présente invention à base de Sn et de CaSiO₃. Le spectre montre l'existence de Sn⁰ (sous spectre 1), de Sn^{II} (sous spectre 2), de SnO₂ (sous spectre 3) et de CaSnSiO₅ (sous spectre 4).
- Figure 12 : Variations du potentiel de charge/décharge d'un matériau conforme à la présente invention à base de Sn et de CaSiO₃ dans la fourchette 0,1 à 1,2 V. Sur cette figure, « N Li » indique le nombre de Li intercalés, « P » le potentiel en V par rapport au potentiel du lithium métallique, « Cs » est la capacité gravimétrique en mAh/g.
- Figure 13 : Diffractogramme (Cu Kα) effectué sur un matériau conforme à la présente invention à base de Sn, de Si et de CaSiO₃. Les pics associés aux phases cristallisées CaSiO₃, Si et Sn sont respectivement repérés par des astérisques, des ronds et des croix.
- Figure 14 : Variations du potentiel de charge/décharge d'un matériau conforme à la présente invention à base de Sn, de Si et de CaSiO₃ dans la fourchette 0,1 à 1,2 V. Sur cette figure, « N Li » indique le nombre de Li intercalés, « P » le potentiel en V par rapport au potentiel du lithium métallique, « Cs » est la capacité gravimétrique en mAh/g.

### Exemples

### Exemple 1 : Fabrication d'un matériau selon l'invention à base de Sn et de BPO₄

Dans cet exemple, le matériau d'électrode négative est synthétisé par voie céramique à partir de BPO₄ et de βSn.

Pour la synthèse de BPO₄, on mélange les deux précurseurs H₃BO₃ et NH₄H₂PO₄ en proportions stoechiométriques et on broie le mélange dans un mortier en agate pour l'homogénéiser. Le mélange obtenu est placé dans un creuset en aluminium et chauffé (premier traitement thermique), après une montée en température de 1°C/min, à 300°C pendant une durée de 3 heures afin d'effectuer un dégagement possible de NH₃ provenant du précurseur NH₄H₂PO₄ et permettre une réaction complète entre les précurseurs. Une durée de 6 heures permet une bonne homogénéisation. On obtient un matériau BPO₄, qui est sous forme cristallisée ou amorphe.

Des essais montrent que H₃BO₃ peut être remplacé par B₂O₃. D'autres essais montrent que NH₄H₂PO₄ peut être remplacé par P₂O₅. Toutes les combinaisons entre d'une part B₂O₃ et H₃BO₃ et d'autre part P₂O₅ et NH₄H₂PO₄ sont efficaces. D'autres précurseurs ou associations de précurseurs peuvent donc être envisagés.

Le matériau BPO₄ est alors refroidi à l'air puis broyé dans un mortier en agate, et on obtient des particules cristallisées de BPO₄ de granulométrie micrométrique.

Ces particules de BPO₄ (510 mg) sont mélangées avec β-Sn (1432 mg). Le mélange est finement broyé dans un mortier en agate puis chauffé dans une nacelle en carbone vitreux dans un four horizontal initialement à la température de 500°C sous atmosphère inerte (argon) pendant 6 heures (deuxième traitement thermique). L'atmosphère inerte évite l'oxydation de Sn.

Des essais ont montré que la température doit être suffisamment élevée pour former l'interface entre Sn et BPO₄, c'est-à-dire supérieure à 230°C (température de fusion de l'étain métallique), et suffisamment basse pour éviter la fusion de BPO₄, c'est-à-dire inférieure à 800°C. Différents essais ont montré que la fourchette optimale s'établit entre 300 et 600°C.

D'autres essais ont montré qu'une durée de chauffage comprise entre 4 et 8 heures permet une bonne homogénéisation et une réaction complète, en évitant la croissance d'étain métallique.

Le matériau d'électrode négative obtenu est refroidi par trempe, sous atmosphère inerte pour éviter l'oxydation, entre 500°C et la température ambiante. Il est ensuite broyé dans un mortier en agate ou par broyage mécanique de manière à obtenir une taille de particules comprise entre 1 et 10 µm.

Le matériau obtenu comprend une phase active Sn et une phase support BPO₄ (proportions 0,4 BPO₄/Sn). Une interface mixte constituée des éléments Sn, B, P et 0 existe bien entre la phase support et la phase active.

En effet, les analyses par diffraction X montrent des pics bien marqués qui mettent en évidence l'existence de deux phases cristallisées : β-Sn (matériau actif) et BPO₄ (matrice inactive) et d'une phase amorphe. Ceci suggère que le matériau actif et le matériau inactif réagissent partiellement du fait de la température de synthèse du matériau.

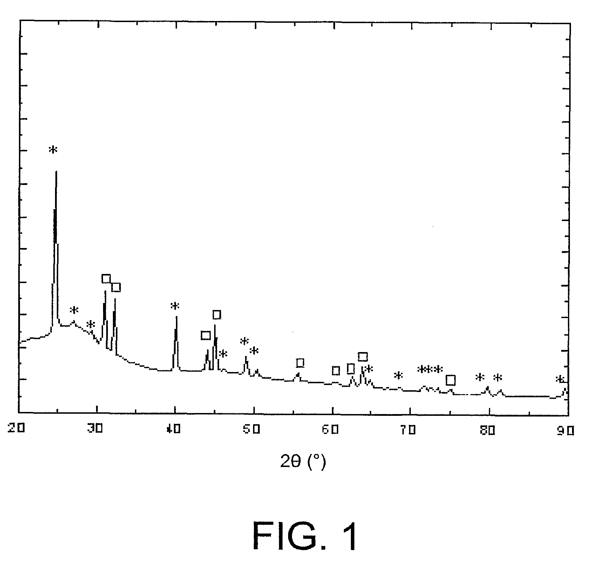

Les résultats de ces analyses sont reportés sur la figure 1. En abscisse, 2θ représente deux fois l'angle de diffraction en degrés. Le matériau vierge (« pristine material ») peut être considéré comme un matériau composite formé par des particules cristallines de β-Sn et de BPO₄ et une phase amorphe SnBPO₄ à l'interface entre les deux phases cristallines. On retrouve cette structure lorsque Sn est remplacé par exemple par Si ou Al (exemples ci-dessous).

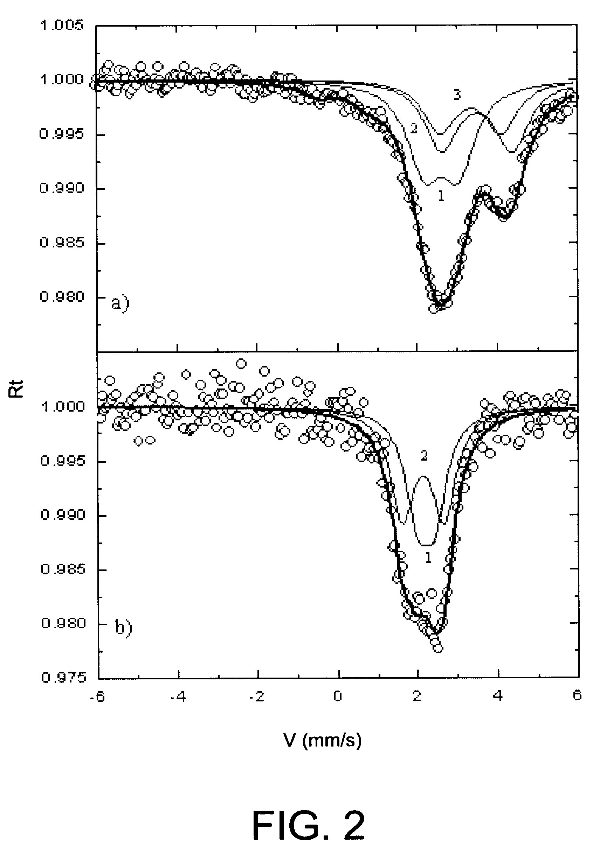

La présence d'étain dans la phase amorphe est confirmée par la spectroscopie Mössbauer ¹¹⁹Sn. Les spectres Mössbauer (figure 2(a)) montrent l'existence de deux degrés d'oxydation pour l'étain : Sn(0) (β-Sn) et Sn(II). Les sous-spectres 2 et 3 associés à Sn(II) sont similaires à ceux trouvés dans les oxydes d'étain composites (TCO) ce qui suggère l'existence d'une phase amorphe de borophosphate d'étain vitreux comme cela était attendu de réactions impliquant l'étain qui est un élément formateur du verre. Le sous-spectre 1 associé à Sn(0) est dû à βSn. Les résultats de ces analyses sont reportés sur la figure 2. Sur cette figure, « Rt » représente la transmission relative (rapport de l'intensité du faisceau transmit sur le faisceau incident) et « V » la vitesse en mm/s.

Une telle microstructure diffère des structures composites à base d'étain étudiées dans l'art antérieur qui sont homogènes et amorphes.

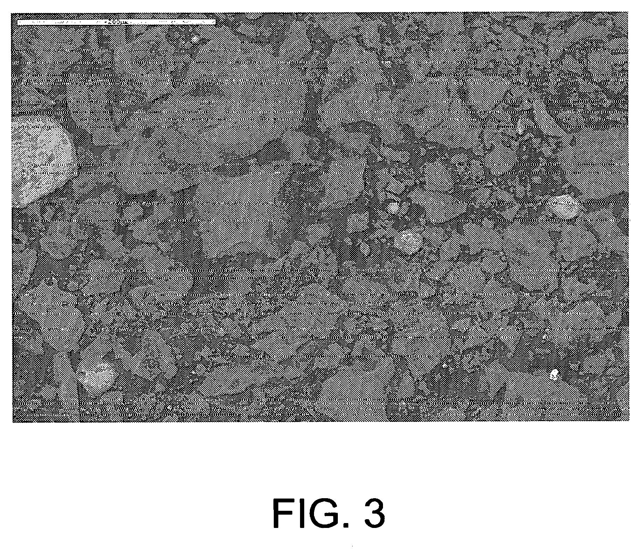

Des études en microscopie électronique montrent des particules d'environ 10 µm de diamètre et l'analyse chimique locale montre des particules plus ou moins riches en étain. La figure 3 est une photographie montrant un matériau obtenu suivant cet exemple. Sur cette photographie, 1 cm correspond à 45 µm. Les zones claires correspondent aux zones les plus riches en étain.

### Exemple 2 : accumulateur test lithium-ion pour la caractérisation électrochimique d'un matériau selon l'invention

Ces expérimentations ont été réalisées dans le but d'étudier les propriétés électrochimiques des matériaux obtenus suivant l'exemple 1.

Pour cela, des mélanges de poudres du matériau obtenu dans l'exemple 1 (90% en poids) et de noir de carbone (10% en poids) en tant que matériau conducteur électronique et stabilisant, ont été pressés sous forme de pastilles. Ces pastilles forment l'électrode positive.

L'électrode négative est composée par une feuille de lithium.

Une cellule électrochimique à deux électrodes est formée. Les tests électrochimiques ont été effectués sur des cellules SWAGELOCK (marque de commerce).

L'électrolyte est une solution de carbonate d'éthylène et de carbonate de diméthyle (1 :3) comprenant 1 M de LiPF₆.

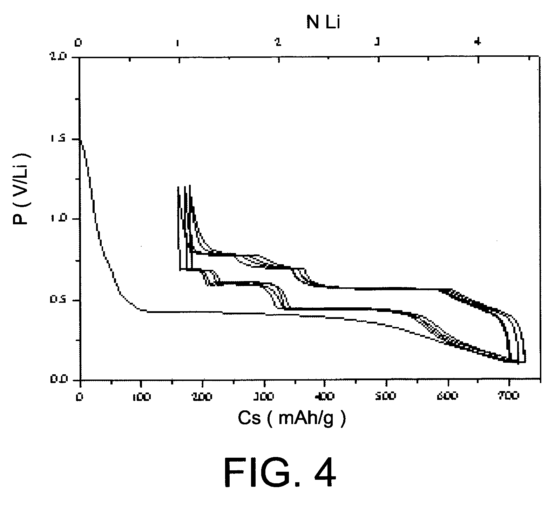

Les cycles de charge/décharge de la cellule ont été effectués en mode galvanostatique à C/20 (C = 1 Li mol⁻¹.h⁻¹) dans la fourchette de potentiel allant de 1,5 jusqu'à 0,40 V par rapport au lithium métallique. La figure 4A montre les caractéristiques de charge/décharge de cette cellule.

Lors de la première décharge le potentiel décroît de 1,5 V jusqu'à 0,4 V avec l'insertion d'environ 0,5 Li mol⁻¹. Cette faible valeur du potentiel et les mesures Môssbauer indiquent la réduction de Sn(II) appartenant à la phase vitreuse (amorphe) en Sn(0).

Puis l'insertion supplémentaire de lithium jusqu'à 4,2 Li mol⁻¹ conduit à la formation d'alliages Li-Sn comme le montre le spectre Mössbauer obtenu à la fin de la première décharge sur la figure 2(b) annexée.

L'extraction de Li à partir de ces alliages Li-Sn lors de la première charge montre une courbe de potentiel formée de 3 plateaux bien définis correspondants à des réactions biphasées impliquant des phases cristallisées LiₓSn comme observées dans l'art antérieur pour βSn, mais avec le matériau de la présente invention, la réaction est réversible.

La capacité réversible observée est d'environ 550 mAh/g. Cette capacité est proche de celle obtenue pour les composites amorphes d'étain TCO (environ 600 mAh/g) mais la perte irréversible au premier cycle de 160 mAh/g est inférieure à celle des TCO (environ 400 mAh/g).

Cela montre clairement la supériorité des composés de la présente invention par rapport aux TCO de l'art antérieur, notamment concernant la réversibilité (capacité spécifique).

La tenue en cyclage de rétention des matériaux de la présente invention à 10 cycles est supérieure à 98%.

### Exemple 3 : Fabrication d'un matériau selon l'invention à base de Si et de BPO₄

Cet exemple permet la fabrication d'un matériau selon l'invention dans lequel la phase active est constituée de Si et la phase support est BPO₄. Dans cet exemple, les proportions sont 0,4 BPO₄/Si.

Le procédé mis en oeuvre est celui de l'exemple 1. Les proportions de Si et BPO₄ sont respectivement de 797 mg et de 1203 mg.

Des courbes électrochimiques comparables à celles de l'étain sont obtenues.

Le matériau obtenu est testé comme dans l'exemple 2. Il comprend une phase active Si et une phase support BPO₄ (proportions 0,4 BPO₄/Si).

Les résultats confirment la supériorité des composés de la présente invention sur les TCO notamment concernant la réversibilité.

### Exemple 4 : Fabrication d'un matériau selon l'invention à base de Al et de BPO₄

Cet exemple permet la fabrication d'un matériau selon l'invention dans lequel la phase active est constituée de Al et la phase support est BPO₄. Dans cet exemple, les proportions sont 0,4 BPO₄/Al.

Le procédé mis en oeuvre est celui de l'exemple 1. Les proportions de Al et BPO₄ sont respectivement de 779 mg et de 1225 mg.

Des courbes électrochimiques comparables à celles de l'étain sont obtenues.

Le matériau obtenu est testé comme dans l'exemple 2. Il comprend une phase active Al et une phase support BPO₄ (proportions 0,4 BPO₄/Al).

Les résultats obtenus confirment la supériorité des composés de la présente invention sur les TCO de l'art antérieur notamment concernant la réversibilité.

### Exemple 5 : Procédé de fabrication d'un accumulateur lithium-ion en utilisant le matériau de la présente invention

Le matériau fabriqué dans l'exemple 1, 3 ou 4 est utilisé pour fabriquer une électrode négative.

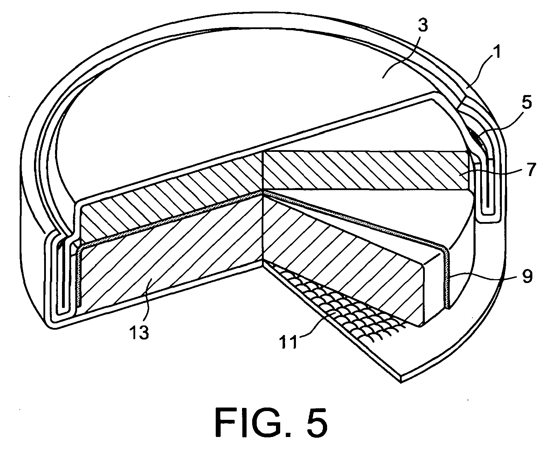

Cet exemple montre l'utilisation de matériaux d'électrode négative, conformes à la présente invention, dans un dispositif se présentant sous la forme d'une pile bouton, de fabrication standard, dont le schéma est donné à la figure 5 annexée.

Sur cette figure sont représentés : une borne positive (1) (« positive can »), une borne négative (3) (« négative cell terminal »), un isolant séparant les deux bornes (5) (« grommet »), une anode (7), un séparateur (9) (« separator »), un collecteur cathode (11) (« cathode collector ») et une cathode (13). Ces éléments constituent ensemble un accumulateur lithium-ion sous forme de pile bouton.

L'électrode négative de l'accumulateur lithium-ion a été préparée par voie polyfluore de vinylidene / N-méthyl-2-pyrrolidone (voie PVDF-NMP) avec la composition suivante : 86% de matériau actif selon l'invention (Sn, Al ou Si et BPO₄), 6% de polyfluore de vinylidene (PVDF), 8% d'un mélange de carbones : 4% de carbone très pur issu du noir d'acétylène (référence Y50A commercialisé par la Société du Noir d'Acétylène de l'Aubette) et 4% de graphite (référence UF₂ commercialisé par la société Graphit Kropfmühl AG) et N-méthyl-2-pyrrolidone (NMP) comme solvant.

L'électrolyte est LiPF₆ (1M) carbonate de propylène/carbonate d'éthylène/carbonate de diméthyle (PC /EC/3DMC en proportions 1:1:3) et le matériau d'électrode positive a pour formule LiCoO₂.

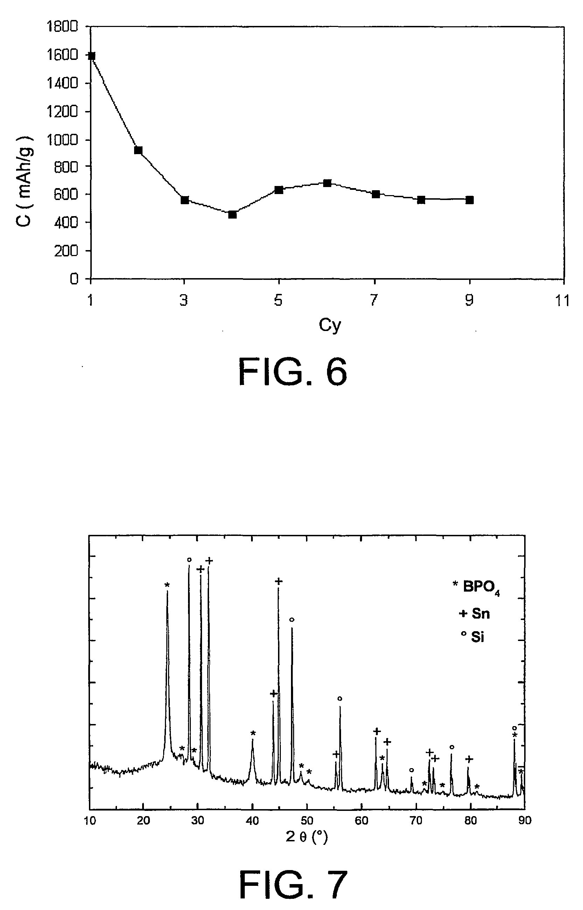

La différence de potentiel aux bornes de l'accumulateur lithium-ion est comprise entre 3,5 et 4V et la capacité réversible est stabilisée à 600 mAh/g (Fig. 6).

Sur cette figure, « C » représente la capacité gravimétrique en mAh/g qui est reportée en fonction du nombre de cycles (« Cy »).

### Exemple 6 : Fabrication d'un matériau selon l'invention à base de Sn, de Si et de BPO₄

Dans cet exemple, on fabrique un matériau selon l'invention dans lequel la phase active est constituée d'un mélange de Sn et de Si et la phase support est BPO₄. Les proportions molaires sont 0,5 BPO₄/0,5 Sn, 0,5 Si.

Le procédé mis en oeuvre est celui exposé dans l'exemple 1. Les proportions de Sn, Si et BPO₄ sont respectivement de 940 mg, 222 mg et de 838 mg.

Le matériau obtenu comprend une phase active constituée d'un mélange de Sn et de Si et une phase support BPO₄ (proportions molaires 0,5 BPO₄/0,5 Sn, 0,5 Si). Une interface mixte constituée des éléments Sn, B, P et 0 existe bien entre la phase support et la phase active.

Les analyses par diffraction X, reportées sur la figure 7, montrent bien l'existence de trois phases cristallisées : P - Sn (phase active), Si (phase active) et BPO₄ (phase inactive).

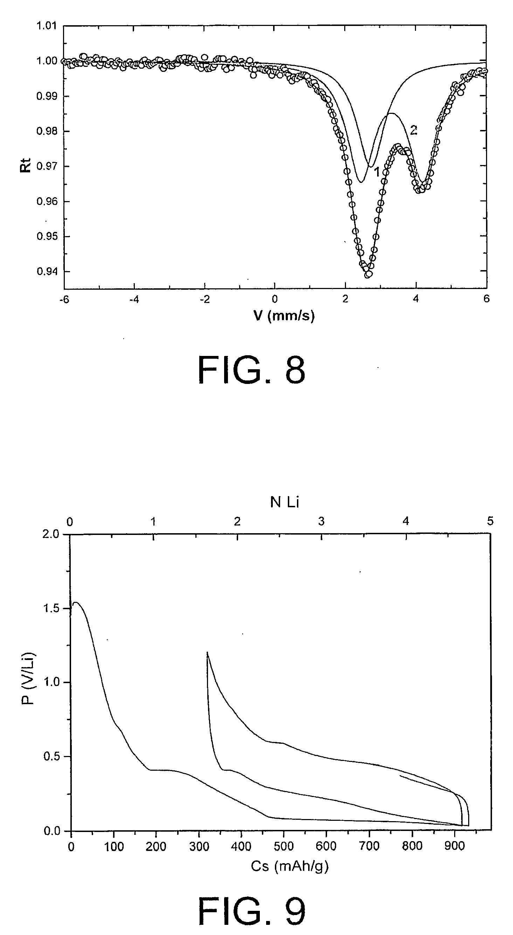

Comme pour l'exemple 1, la présence d'étain dans la phase amorphe est confirmée par la spectroscopie Mössbauer de ¹¹⁹Sn représentée sur la figure 8.

Le matériau testé comme dans l'exemple 2, présente une capacité réversible d'environ 650 mAh/g.

La figure 9 montre les caractéristiques de charge/décharge d'une telle cellule.

### Exemple 7 : Fabrication d'un matériau selon l'invention à base de Sn et de CaSiO₃

Dans cet exemple, on fabrique un matériau selon l'invention dans lequel la phase active est constituée de Sn et la phase support est CaSiO₃. Les proportions molaires sont 0,4 CaSiO₃/1 Sn.

La synthèse de la phase support CaSiO₃ est réalisée par voie sol-gel à partir des précurseurs Si(OC₂H₅)₄ et Ca(NO₃), 4H₂O. Le gel formé est ensuite séché à l'étuve à 80°C, puis calciné à 1100°C pendant 4 heures. Le matériau est ensuite synthétisé selon un procédé semblable à celui décrit dans l'exemple 1.

Les proportions de Sn, et CaSiO₃ sont respectivement de 1437 mg et de 563 mg. Le mélange est finement broyé dans un mortier en agate puis chauffé dans une nacelle en alumine à 500°C sous atmosphère inerte (argon) pendant ½ heure, puis à 850°C pendant 7 heures.

Le matériau obtenu comprend une phase active constituée de Sn et une phase support CaSiO₃ (proportions molaires 0,4 CaSiO₃ / 1 Sn). Une interface mixte constituée des éléments Ca, Sn, Si, et O existe bien entre la phase support et la phase active.

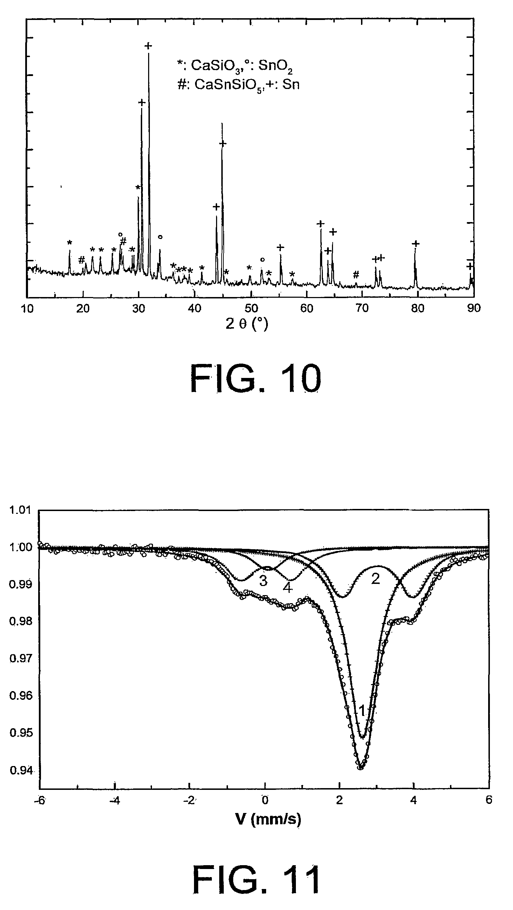

Les analyses par diffraction X, reportées sur la figure 10, montrent bien l'existence de trois phases cristallisées : β - Sn (phase active), CaSiO₃ (phase inactive) et d'une interface plus complexe vitrocéramique comprenant des particules cristallisées de SnO₂ et CaSiSnO₅ dans une phase amorphe.

Le spectre Mössbauer représenté sur la figure 11 permet l'identification des différentes phases. Le sous spectre 1 caractérise la phase active β Sn. La présence d'étain dans la phase amorphe est confirmée par la présence du sous spectre 2. Les sous spectres 3 et 4 sont caractéristiques de SnO₂ et CaSiSnO₅.

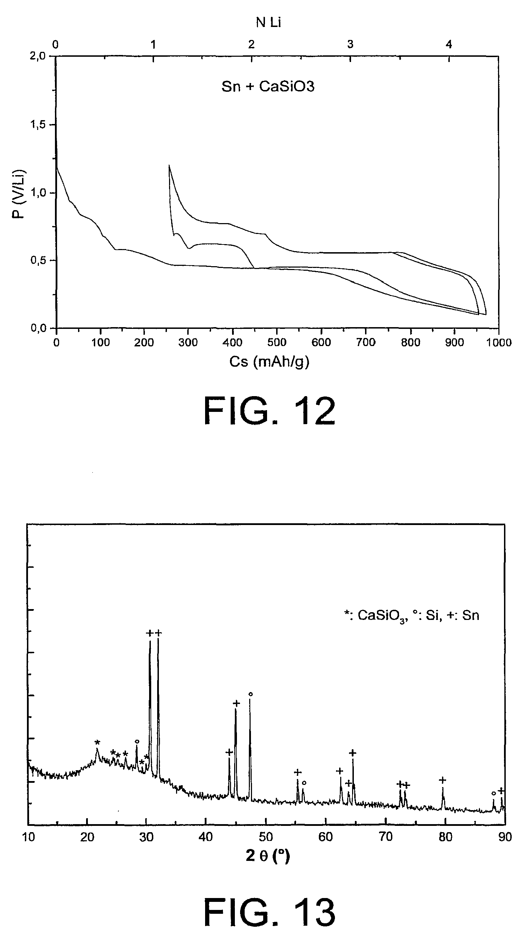

Le matériau testé comme dans l'exemple 2, présente une capacité réversible d'environ 650 mAh/g. La figure 12 montre les caractéristiques de charge/décharge d'une telle cellule.

### Exemple 8 : Fabrication d'un matériau selon l'invention à base de Sn, de Si et de CaSiO₃

Dans cet exemple, on fabrique un matériau selon l'invention dans lequel la phase active est constituée d'un mélange de Sn et de Si et la phase support est CaSiO₃. Les proportions molaires sont 1 CaSiO₃/1 Sn, 1 Si.

Le procédé mis en oeuvre est celui de l'exemple 7. Les proportions de Sn, de Si et de CaSiO₃ sont respectivement de 903 mg, 214 mg et de 883 mg.

Le matériau obtenu comprend une phase active constituée d'un mélange de Sn et de Si et une phase support CaSiO₃ (proportions molaires 1 CaSiO₃/1 Sn, 1 Si) et d'une interface mixte constituée des éléments Ca, Sn, Si, et O.

Les analyses par diffraction X, reportées sur la figure 13, montrent bien l'existence de trois phases cristallisées : β - Sn (phase active), Si (phase active) et CaSiO₃ (phase inactive).

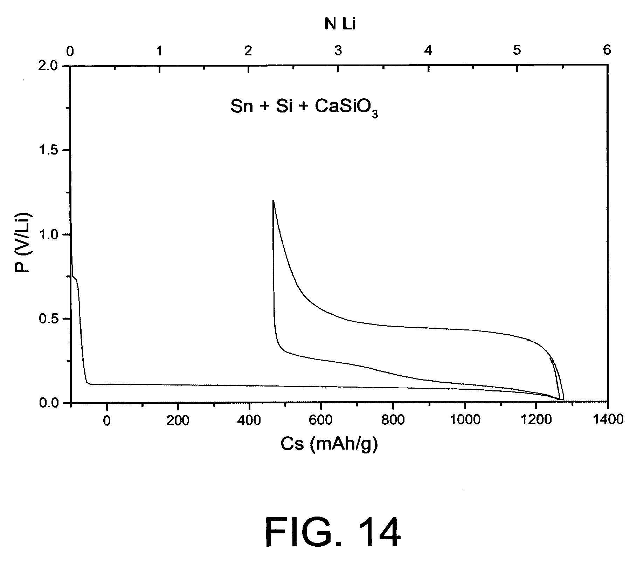

Le matériau testé comme dans l'exemple 2, présente une capacité réversible d'environ 750 mAh/g. La figure 14 montre les caractéristiques de charge/décharge d'une telle cellule.

### Liste des références

**[1]** J.O. Besenhard et al dans J. Power Sources 68 (1997) 87.
**[2]** EP-A-0 651 450 - Y. Idota et al.
**[3]** Y. Idota et al., Science 276 (1997) 1395.
**[4]** I.A. Courney et al, J. Electrochem. Soc. 146 (1999) 59.
**[5]** G.R. Goward et al, J. Mater. Chem. 10 (2000) 1241.
**[6]** J. Chouvin et al, Solid State Sciences 6 (2004) 39.
**[7]** M. Winter et J.O. Besenhard, Electrochemica Acta 45 (1999) 31.
[8] Hong Li et al, J. Electrochem. Soc. 148 (2001) A915.

## Revendications

1. Procédé de fabrication d'un matériau d'électrode négative comprenant une phase active constituée d'un matériau M à base de Al, Si, Sn, Sb ou d'un mélange de ceux-ci, le matériau M étant sous forme métallique et ayant un degré d'oxydation de zéro, et une phase support électrochimiquement inactive constituée d'un matériau XₐY_{b}O_{c}, dans lequel :
O est un oxygène ;
Y est un cation de degré d'oxydation m = 3, 4, 5 ou 6, choisi parmi B^{III}, Al^{III}, Si^{IV}, Ge^{IV}, P^{V}, Sb^{V}, S^{VI} ou une combinaison de ces éléments ;
X est un cation de degré d'oxydation d = 1, 2, 3, 4 ou 5, choisi parmi les éléments alcalins, les éléments alcalino-terreux, les éléments de transition de degré d'oxydation compris entre 1 et 5, les éléments p de degré d'oxydation 3 ou 5, ou une combinaison de ces éléments, X assurant l'électroneutralité de XₐY_{b}O_{c} ; et dans laquelle :
c est tel que 2 ≤ c ≤ 10 ;
b est tel que 1 ≤ b ≤ 4 ; et
a = (2c-bm)/d ;
une interface de composition mixte existant entre la phase active et la phase support, ladite interface étant constituée des éléments M, X, Y et O, l'élément M étant, dans ladite interface, à un degré d'oxydation différent de zéro ;
ledit procédé comprenant les étapes suivantes :
- mélange de précurseurs d'oxydes de X et de Y ;
- premier traitement thermique du mélange de précurseurs d'oxydes de X et de Y réalisé à une température de 100 à 1200°C, pendant une durée de 2 à 12 heures, afin d'obtenir le matériau XₐY_{b}O_{c} ;
- refroidissement puis broyage du matériau XₐY_{b}O_{c} obtenu ;
- mélange du matériau XₐY_{b}O_{c} broyé obtenu avec la phase active M, M étant sous forme métallique et ayant un degré d'oxydation de zéro, ;
- deuxième traitement thermique réalisé sous atmosphère non oxydante pour le matériau M et à une température inférieure à la température de fusion du matériau XₐY_{b}O_{c} et suffisamment élevée pour que le matériau M réagisse chimiquement avec XₐY_{b}O_{c} pour former ladite interface entre ladite phase active et ladite phase support et obtenir ainsi ledit matériau d'électrode négative, ledit deuxième traitement thermique étant réalisé à une température de 100 à 1200°C, pendant une durée de 2 à 12 heures, sous atmosphère inerte ; et
- refroidissement dudit matériau d'électrode négative obtenu.

2. Procédé selon la revendication 1, dans lequel le premier traitement thermique est réalisé après une montée en température de 1 à 20°C/minute.

3. Procédé selon la revendication 1, dans lequel le broyage est réalisé de manière à obtenir une granulométrie de taille micrométrique et/ou nanométrique.

4. Procédé selon la revendication 1, dans lequel le matériau obtenu est refroidi par trempe sous atmosphère inerte, à la température ambiante.

5. Procédé selon la revendication 1, dans lequel est (sont) présent(s) :
(i) des complexes anioniques de formule (Y_{b}O_{c})ⁿ à base d'unités tétraédriques YO₄, où n = bm - 2c ≤ 0 avec 1 ≤ b ≤ 4, avec m, le degré d'oxydation de Y, égal à 3, 4, 5 ou 6, et avec 2 ≤ c ≤ 10; et/ou
(ii) des réseaux continus mono-, bi- ou tridimensionnels formés d'enchaînements infinis d'entités anioniques (Y_{b}O_{c})ⁿ, avec Y, b, c et n tels que définis précédemment.

6. Procédé selon la revendication 1, dans lequel la proportion molaire [M]/[XₐY_{b}O_{c}] est comprise entre 0,1 et 100.

7. Procédé selon la revendication 1, dans lequel le précurseur d'oxyde de X est B₂O₃ et/ou H₃BO₃, et le précurseur d'oxyde de Y est P₂O₅ et/ou NH₄H₂PO₄, et dans lequel la phase support fabriquée est BPO₄, l'interface de composition mixte étant constituée des éléments M, B, P et O.

8. Procédé selon la revendication 1, dans lequel, dans le matériau M, les éléments Al, Si, Sn et Sb sont associés à du carbone dans une proportion molaire pouvant aller jusqu'à 1:1.

9. Matériau d'électrode négative obtenu par un procédé selon l'une quelconque des revendications 1 à 8 comprenant une phase active constituée d'un matériau M à base de Al, Si, Sn, Sb ou d'un mélange de ceux-ci, le matériau M étant sous forme métallique et ayant un degré d'oxydation de zéro, et une phase support électrochimiquement inactive constituée d'un matériau XₐY_{b}O_{c} , dans lequel :
O est un oxygène ;
Y est un cation de degré d'oxydation m = 3, 4, 5 ou 6, choisi parmi B^{III}, Al^{III}, Si^{IV}, Ge^{IV}, p^{v}, Sb^{V}, S^{VI} ou une combinaison de ces éléments ;
X est un cation de degré d'oxydation d = 1, 2, 3, 4 ou 5, choisi parmi les éléments alcalins, les éléments alcalino-terreux, les éléments de transition de degré d'oxydation compris entre 1 et 5, les éléments p de degré d'oxydation 3 ou 5, ou une combinaison de ces éléments, X assurant l'électroneutralité de XₐY_{b}O_{c} ; et dans laquelle :
c est tel que 2 ≤ c ≤ 10 ;
b est tel que 2 ≤ b ≤ 4 ; et
a = (2c-bm)/d ;
une interface de composition mixte existant entre la phase active et la phase support, ladite interface étant constituée des éléments M, X, Y et O et étant un produit de la réaction chimique entre le matériau M et XₐY_{b}O_{c}, l'élément M étant, dans ladite interface, à un degré d'oxydation différent de zéro.

10. Matériau selon la revendication 9, dans lequel est (sont) présent(s) :
(i) des complexes anioniques de formule (Y_{b}O_{c})ⁿ à base d'unités tétraédriques YO₄, où n = bm-2c ≤ 0 avec 1 ≤ b ≤ 4, avec m, le degré d'oxydation de Y, égal à 3, 4, 5 ou 6, et avec 2 ≤ c ≤ 10; et/ou
(ii) des réseaux continus mono- bi- ou tridimensionnels formés d'enchaînements infinis d'entités anioniques (Y_{b}O_{c})ⁿ, avec Y, b, c et n tels que définis précédemment.

11. Matériau selon la revendication 9, dans lequel la proportion molaire [M] / [XₐY_{b}O_{c}] est de 0,1 à 100.

12. Matériau selon la revendication 9, dans lequel, dans le matériau M, les éléments Al, Si, Sn et Sb sont associés à du carbone dans une proportion molaire pouvant aller jusqu'à 1:1.

13. Matériau selon la revendication 9, comprenant une phase active M à base de Sn, Si ou Al ou d'un mélange de ceux-ci en interaction avec une phase support BPO₄, une interface de composition mixte existant entre la phase active et la phase support, ladite interface étant constituée des éléments M, B, P et O.

14. Electrode négative d'accumulateur lithium-ion rechargeable **caractérisée en ce qu'**elle comprend un matériau selon la revendication 9.

15. Accumulateur lithium-ion rechargeable comprenant au moins une électrode positive, au moins une électrode négative, et un électrolyte, ledit accumulateur étant caractérisé en ce ladite, au moins une, électrode négative comprend un matériau d'électrode négative selon la revendication 9.

## Patentansprüche

1. Verfahren zur Herstellung eines Negativelektrodenmaterials, umfassend eine aktive Phase, die gebildet ist durch ein Material M auf Basis von Al, Si, Sn, Sb oder einer Mischung derselben, wobei das Material M in metallischer Form vorliegt und einen Oxidationsgrad von 0 hat, sowie eine elektrochemisch inaktive Trägerphase, gebildet durch ein Material XaY_{b}O_{c}, wobei:
O ein Sauerstoff ist;
Y ein Kation vom Oxidationsgrad m = 3, 4, 5 oder 6 ist, ausgewählt aus B^{III}, Al^{III}, Si^{IV}, Ge^{IV}, P^{V}, Sb^{V}, S^{VI} oder einer Kombination dieser Elemente;
X ein Kation vom Oxidationsgrad d = 1, 2, 3, 4 oder 5 ist, ausgewählt aus den Alkalielementen, den Erdalkalielementen, den Übergangselementen mit einem Oxidationsgrad, der zwischen 1 und 5 enthalten ist, den Elementen p vom Oxidationsgrad 3 oder 5, oder einer Kombination dieser Elemente, wobei X die Elektroneutralität von XₐY_{b}O_{c} gewährleistet; und wobei:
c derart ist, dass 2 ≤ c ≤ 10;
b derart ist, dass 1 ≤ b ≤ 4; und
a = (2c-bm) /d;
wobei eine Mischverbindungsgrenzfläche existiert zwischen der aktiven Phase und der Trägerphase, wobei die Grenzfläche durch die Elemente M, X, Y und O gebildet ist, wobei das Element M in der Grenzfläche bei einem von Null verschiedenen Oxidationsgrad vorliegt;
wobei das Verfahren die folgenden Schritte umfasst:
- Mischen von Präkursoren von Oxiden von X und von Y;
- erstes thermisches Behandeln der Mischung von Präkursoren von Oxiden von X und von Y, realisiert bei einer Temperatur von 100 bis 1200°C während einer Dauer von 2 bis 12 Stunden, um das Material XₐY_{b}O_{c} zu erhalten;
- Abkühlen und anschließendes Zerkleinern des erhaltenen Materials XₐY_{b}O_{c};
- Mischen des erhaltenen zerkleinerten Materials XₐY_{b}O_{c} mit der aktiven Phase M, wobei M in metallischer Form vorliegt und einen Oxidationsgrad von Null hat;
- zweites thermisches Behandeln, realisiert unter einer für das Material M nicht oxidierenden Atmosphäre und bei einer Temperatur unterhalb der Schmelztemperatur des Materials XₐY_{b}O_{c} und ausreichend hoch, damit das Material M chemisch mit XₐY_{b}O_{c} reagiert, um die Grenzfläche zu bilden zwischen der aktiven Phase und der Trägerphase und somit das Negativelektrodenmaterial zu erhalten, wobei das zweite thermische Behandeln bei einer Temperatur von 100 bis 1200°C während einer Dauer von 2 bis 12 Stunden unter Inertatmosphäre realisiert wird; und
- Abkühlen des erhaltenen Negativelektrodenmaterials.

2. Verfahren nach Anspruch 1, bei dem das erste thermische Behandeln nach einem Temperaturanstieg von 1 bis 20°C/Minute realisiert wird.

3. Verfahren nach Anspruch 1, bei dem das Zerkleinern derart realisiert wird, dass eine Körnung in Mikrometer- und/oder Nanometergröße erhalten wird.

4. Verfahren nach Anspruch 1, bei dem das erhaltene Material durch Eintauchen unter Inertatmosphäre bei der Umgebungstemperatur abgekühlt wird.

5. Verfahren nach Anspruch 1, bei dem Folgendes vorhanden ist/sind:
(i) anionische Komplexe der Formel (Y_{b}O_{c})ⁿ auf Basis von tetraedischen Einheiten YO₄, wobei n = bm-2c ≤ 0, mit 1 ≤ b ≤ 4, wobei m, der Oxidationsgrad von Y, gleich 3, 4, 5 oder 6 ist, und mit 2 ≤ c ≤ 10; und/oder
(ii) durchgehende ein-, zwei- oder dreidimensionale Netze, die gebildet sind durch unendliche Ketten von anionischen Einheiten (V_{b}O_{c})ⁿ mit Y, b, c und n wie vorstehend definiert.

6. Verfahren nach Anspruch 1, bei dem das molare Verhältnis [M] / [XaY_{b}O_{c}] zwischen 0,1 und 100 enthalten ist.

7. Verfahren nach Anspruch 1, bei dem der Präkursor von Oxid von X B₂O₃ und/oder H₃BO₃ ist, und wobei der Präkursor von Oxid von Y P₂O₅ und/oder NH₄H₂PO₄ ist, und wobei die hergestellte Trägerphase BPO₄ ist, wobei die Mischverbindungsgrenzfläche durch die Elemente M, B, P und O gebildet ist.

8. Verfahren nach Anspruch 1, bei dem in dem Material M die Elemente Al, Si, Sn und Sb in einem molaren Verhältnis, das bis zu 1:1 gehen kann, Kohlenstoff zugeordnet sind.

9. Negativelektrodenmaterial, das durch ein Verfahren nach einem der Ansprüche 1 bis 8 erhalten ist, umfassend eine aktive Phase, die gebildet ist durch ein Material M auf Basis von Al, Si, Sn, Sb oder einer Mischung derselben, wobei das Material M in metallischer Form vorliegt und einen Oxidationsgrad von Null hat, sowie eine elektrochemisch inaktive Trägerphase, die durch ein Material XₐY_{b}O_{c} gebildet ist, wobei:
O ein Sauerstoff ist;
Y ein Kation vom Oxidationsgrad m = 3, 4, 5 oder 6 ist, ausgewählt aus B^{III}, Aₗ^{III}, Si^{IV}, Ge^{Iv}, P^{V}, Sb^{V}, S^{VI} oder einer Kombination dieser Elemente;
X ein Kation vom Oxidationsgrad d = 1, 2, 3, 4 oder 5 ist, ausgewählt aus den Alkalielementen, den Erdalkalielementen, den Übergangselementen mit einem Oxidationsgrad, der zwischen 1 und 5 enthalten ist, den Elementen p vom Oxidationsgrad 3 oder 5, oder einer Kombination dieser Elemente, wobei X die Elektroneutralität von XₐY_{b}O_{c} gewährleistet; und wobei:
c derart ist, dass 2 ≤ c ≤ 10;
b derart ist, dass 1 ≤ b ≤ 4; und
a = (2c-bm) /d;
wobei eine Mischverbindungsgrenzfläche existiert zwischen der aktiven Phase und der Trägerphase, wobei die Grenzfläche gebildet ist durch die Elemente M, X, Y und O und ein Produkt der chemischen Reaktion zwischen dem Material M und XₐY_{b}O_{c} ist, wobei das Element M in der Grenzfläche bei einem von Null verschiedenen Oxidationsgrad vorliegt.

10. Material nach Anspruch 9, bei dem Folgendes vorhanden ist/sind:
(i) anionische Komplexe der Formel (Y_{b}O_{c})ⁿ auf Basis von tetraedischen Einheiten YO₄, wobei n = bm-2c ≤ 0, mit 1 ≤ b ≤ 4, wobei m, der Oxidationsgrad von Y, gleich 3, 4, 5 oder 6 ist, und mit 2 ≤ c ≤ 10; und/oder
(ii) durchgehende ein-, zwei- oder dreidimensionale Netze, die gebildet sind durch unendliche Ketten von anionischen Einheiten (Y_{b}O_{c})ⁿ mit Y, b, c und n wie vorstehend definiert.

11. Material nach Anspruch 9, bei dem das molare Verhältnis IM] / [XaY_{b}Oc] zwischen 0,1 und 100 enthalten ist.

12. Material nach Anspruch 9, bei dem in dem Material M die Elemente Al, Si, Sn und Sb in einem molaren Verhältnis, das bis zu 1:1 gehen kann, Kohlenstoff zugeordnet sind.

13. Material nach Anspruch 9, umfassend eine aktive Phase M auf Basis von Sn, Si oder Al oder einer Mischung derselben in Wechselwirkung mit einer Trägerphase BPO₄, wobei eine Mischverbindungsgrenzfläche existiert zwischen der aktiven Phase und der Trägerphase, wobei die Grenzfläche durch die Elemente M, B, P und O gebildet ist.

14. Negativelektrode eines wiederaufladbaren Lithium-Ionen-Akkumulators, **dadurch gekennzeichnet, dass** sie ein Material nach Anspruch 9 enthält.

15. Wiederaufladbarer Lithium-Ionen-Akkumulator, umfassend wenigstens eine Positivelektrode, wenigstens eine Negativelektrode sowie einen Elektrolyten, wobei der Akkumuiator **dadurch gekennzeichnet ist, dass** die wenigstens eine Negativelektrode ein Negativelektrodenmaterial nach Anspruch 9 enthält.

## Claims

1. Method for producing a negative electrode material comprising an active phase consisting of a material M based on Al, Si, Sn, Sb or a mixture thereof, the material M being in the metallic form and presenting an oxidation state of 0, and an electrochemically inactive support phase consisting of a material XₐY_{b}O_{c}, wherein:
O is an oxygen;
Y is a cation with oxidation degree m = 3, 4, 5 or 6, selected from B^{III}, Al^{III}, Si^{IV}, Ge^{Iv}, P^{V}, Sb^{V}, S^{VI} or a combination thereof;
X is a cation with oxidation degree d = 1, 2, 3, 4 or 5, selected from the alkaline elements, alkaline earth elements, transition elements having oxidation degree between 1 and 5, elements p having oxidation degree 3 or 5, or a combination thereof, X ensuring the electroneutrality of XₐY_{b}O_{c}; and wherein:
c is such that 2 ≤ c ≤ 10;
b is such that 1 ≤ b ≤ 4; and
a = (2c-bm)/d;
an interface of mixed composition existing between the active phase and the support phase, said interface consisting of the elements M, X, Y and 0, the element M being, in said interface, at an oxidation degree different from zero;
said method comprising the following steps:
- mixing of the oxide precursors of X and Y;
- first heat treatment of the mixture of oxide precursors of X and Y carried out at a temperature of 100 to 1200°C, for a period of 2 to 12 hours in order to obtain the material XₐY_{b}O_{c};
- cooling then grinding of the material XₐY_{b}O_{c} obtained;
- mixing of the ground material XₐY_{b}O_{c} obtained with the active phase M, M being in the metallic form and presenting an oxidation state of 0;
- second heat treatment carried out under non-oxidizing atmosphere for the material M and at a temperature below the melting point of the material XₐY_{b}O_{c} and sufficiently high so that the material M reacts chemically with XₐY_{b}O_{c} to form said interface between said active phase and said support phase and thereby to obtain said negative electrode material, said second heat treatment being carried out at a temperature of 100 to 1200°C, for a period of 2 to 12 hours, under inert atmosphere; and
- cooling of said negative electrode material obtained.

2. Method according to claim 1, **characterized in that** the first heat treatment is carried out after a temperature rise of 1 to 20°C/minute.

3. Method according to claim 1, **characterized in that** the grinding is carried out in order to obtain a particle size distribution of micronic and/or nanometric size.

4. Method according to claim 1, **characterized in that** the material obtained is cooled by quenching under inert atmosphere, at ambient temperature.

5. Method according to claim 1, **characterized in that** the following is(are) present:
(i) anionic complexes having the formula (Y_{b}O_{c})ⁿ based on tetrahedral units YO₄, where n = bm-2c ≤ 0 with 1 ≤ b ≤ 4, with m, the oxidation degree of Y, equal to 3, 4, 5 or 6, and with 2 ≤ c ≤ 10; and/or
(ii) continuous mono- bi- or three-dimensional continuous lattices formed of infinite sequences of anionic entities (Y_{b}O_{c})ⁿ, with Y, b, c and n such as defined above.

6. Method according to claim 1, **characterized in that** the molar proportion [M] / [XₐY_{b}O_{c}] is between 0.1 and 100.

7. Method according to claim 1, **characterized in that** the oxide precursor of X is B₂O₃ and/or H₃BO₃, and the oxide precursor of Y is P₂O₅ and/or NH₄H₂PO₄, and wherein the support phase produced is BPO₄, the interface of mixed composition consisting of the elements M, B, P and O.

8. Method according to claim 1, **characterized in that**, in the material M, the elements Al, Si, Sn and Sb are combined with carbon in a molar proportion of up to 1:1.

9. Negative electrode material obtained from a method according to any of claims 1 to 8, comprising an active phase consisting of a material M based on Al, Si, Sn, Sb or a mixture thereof, the material M being in the metallic form and presenting an oxidation state of 0, and an electrochemically inactive support phase consisting of a material XₐY_{b}O_{c}, wherein:
O is an oxygen;
Y is a cation with oxidation degree m = 3, 4, 5 or 6, selected from B^{III}, Al^{III}, Si^{IV}, Ge^{IV}, P^{V}, Sb^{V}, S^{VI} or a combination thereof;
X is a cation with oxidation degree d = 1, 2, 3, 4 or 5, selected from the alkaline elements, alkaline earth elements, transition elements having oxidation degree between 1 and 5, elements p having oxidation degree 3 or 5, or a combination thereof, X ensuring the electroneutrality of XₐY_{b}O_{c}; and wherein:
c is such that 2 ≤ c ≤ 10;
b is such that 1 ≤ b ≤ 4; and
a = (2c-bm)/d;
an interface of mixed composition existing between the active phase and the support phase, said interface consisting of the elements M, X, Y and 0, and being the product of the chemical reaction between the material M and XₐY_{b}O_{c}, the element M being, in said interface, at an oxidation degree different from zero;

10. Material according to claim 9, **characterized in that** the following is (are) present:
(i) anionic complexes having the formula (Y_{b}O_{c})ⁿ based on tetrahedral units YO₄, where n = bm-2c ≤ 0 with 1 ≤ b ≤ 4, with m, the oxidation degree of Y, equal to 3, 4, 5 or 6, and with 2 ≤ c ≤ 10; and/or
(ii) continuous mono- bi- or three-dimensional continuous lattices formed of infinite sequences of anionic entities (Y_{b}O_{c})ₙ, with Y, b, c and n such as defined above.

11. Material according to claim 9, **characterized in that** the molar proportion [M]/[XₐY_{b}O_{c}] is between 0.1 and 100.

12. Material according to claim 9, **characterized in that**, in the material M, the elements Al, Si, Sn and Sb are combined with carbon in a molar proportion of up to 1:1.

13. Material according to claim 9, comprising an active phase M based on Sn, Si or Al or a mixture thereof in interaction with a support phase BPO₄, an interface of mixed composition existing between the active phase and the support phase, said interface consisting of the elements M, B, P and 0.

14. Negative electrode of rechargeable lithium-ion battery, **characterized in that** it comprises a material according to claim 9.

15. Rechargeable lithium-ion battery comprising at least one positive electrode, at least one negative electrode, and an electrolyte, said battery being **characterized in that** said at least one negative electrode comprises a negative electrode material according to claim 9.
